(19) Europäisches Patentamt / European Patent Office / Office européen des brevets

(11) **EP 4 681 538 A1**

(12) **EUROPEAN PATENT APPLICATION**
published in accordance with Art. 153(4) EPC

(43) Date of publication:
**21.01.2026 Bulletin 2026/04**

(21) Application number: **23934714.9**

(22) Date of filing: **30.05.2023**

(51) International Patent Classification (IPC):
**A01N 65/48** $^{(2009.01)}$      **A01N 25/02** $^{(2006.01)}$
**A01P 3/00** $^{(2006.01)}$

(52) Cooperative Patent Classification (CPC):
Y02A 50/30

(86) International application number:
**PCT/CN2023/096990**

(87) International publication number:
**WO 2024/221533 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.04.2023 CN 202310471673**

(71) Applicant: **Shanghai Jiao Tong University Shanghai 200240 (CN)**

(72) Inventors:
- **DAI, Guanghui**
  **Shanghai 200240 (CN)**
- **ZHANG, Yanxin**
  **Shanghai 200240 (CN)**

(74) Representative: **Regimbeau**
**20, rue de Chazelles**
**75847 Paris Cedex 17 (FR)**

(54) **TURMERIC RHIZOME EXTRACT EMULSIFIABLE CONCENTRATE FORMULATION, PREPARATION METHOD THEREFOR, AND USE THEREOF IN PREVENTION AND TREATMENT OF POWDERY MILDEW**

(57)     A turmeric rhizome extract emulsifiable concentrate formulation, a preparation method therefor, and a use thereof in prevention and treatment of powdery mildew. The turmeric rhizome extract emulsifiable concentrate formulation comprises the following components in percentage by mass: 30-70% of a turmeric rhizome extract, 10-35% of an emulsifier and 15-50% of a solvent. An emulsifiable concentrate formulation used for preventing and treating powdery mildew and using a turmeric rhizome extract as an effective component is prepared by compounding the turmeric rhizome extract, the emulsifier and the solvent in a specific mass ratio, relates to a simple preparation process, is convenient to use, has excellent high-temperature and low-temperature stability, and can make the turmeric rhizome extract exert a powdery mildew prevention and treatment effect more stably and lastingly.

EP 4 681 538 A1

**Description**

TECHNICAL FIELD

The present application belongs to the technical field of pesticide formulations, and relates to an emulsifiable concentrate formulation of *Curcuma longa* rhizome extract, a preparation method therefor, and use thereof in the prevention and control of plant powdery mildew.

BACKGROUND

Powdery mildew, a fungal disease, can occur throughout the entire growth period of plants, primarily harming leaves, stems, and fruits. In the early stages of infection, white lesions appear, and the color gradually turns to light brown, and black perithecium may be formed through self-fertilization or hybridization. Initially, the mildews are scattered separately but later merge into a large mildew lesion, and sometimes, the large mildew covers the entire leaf, which severely impairs photosynthesis, disrupts normal metabolism, accelerates premature aging, and reduces crop yield and quality.

In leguminous plants, powdery mildew mainly affects the leaves. Early symptoms include the formation of nearly circular powdery white mildew on the leaves, or the formation of purple-brown spots on the underside of leaves, covering with a thin layer of white powder-the superficial vegetative hyphae of the pathogen. These spots later merge into powdery spots as the reproductive hyphae produce abundant conidia. In severe cases, the spots coalesce, covering the entire leaf and causing the leaf to wither or fall off.

Roses, valued for their ornamental, medicinal, and edible uses, have effects such as refreshing the spleen, relieving depression, dredging meridians, promoting blood circulation, and enhancing beauty. With rising living standards, market demand for roses is increasing, leading to supply shortages in recent years. Powdery mildew is a common disease affecting roses and other *Rosaceae* plants. Infected leaves and young shoots develop a white powdery coating, which can turn leaves yellow and cause them to drop when severe, stunting growth and flowering of the plant, and resulting in significant economic losses for growers. Conventional prevention and treatments include spraying with a 1000-fold dilution of 70% thiophanate-methyl or a 2000-fold dilution of 50% amobam. However, the long-term use of these synthetic chemical fungicides leads to pathogen resistance, reducing efficacy and requiring increased pesticide application, which further harms the environment and food safety.

Grapes, rich in nutritional and medicinal value, have seen expanding cultivation areas in China. However, grapevines are susceptible to various diseases, with powdery mildew being a major threat. The grape powdery mildew affects green parts such as fruits, leaves, and young shoots, with fruit damage causing the greatest losses. Infected fruits develop a gray-white powdery mold, while leaves become covered in a similar coating and gradually spread to the entire leaf, eventually causing the leaf to curl and wither. Young shoots initially show small gray-white spots that spread and darken to dark gray and finally black, severely impacting grape yield and quality. Current control methods include spraying a lime-sulpher-synthetic-solution with 3-5 Baume degrees and a lime-sulpher-synthetic-solution with 0.2-0.5 Baume degrees, or a 500-fold dilution of 50% thiophanate, or a 1000-fold dilution of 70% thiophanate-methyl, or a 1000-fold dilution of 25% triadimefon wettable powder, for one time before and after budbreak, respectively. However, the spraying of conventional chemical synthetic agents causes a series of problems, such as pathogen resistance and pesticide residues. Therefore, it is necessary to effectively improve the conventional prevention and control of grape powdery mildew.

In agricultural production, the use of synthetic chemical pesticides has long accounted for the vast majority of the total amount of pesticides used, but with the continuous promotion and use of synthetic chemical pesticides, their disadvantages have gradually emerged. Synthetic chemical pesticides are difficult to degrade and have high toxicity. Long-term use of synthetic chemical pesticides can easily lead to resistance, thereby reducing or even losing the prevention and control effect. Moreover, synthetic chemical pesticides entering the environment can easily cause environmental pollution. Some chemical pesticides that are difficult to degrade may even be continuously enriched through the food chain and eventually enter the human body, causing harm to human health. Nowadays, under the pursuit of green and environmental protection, the use of synthetic chemical pesticides has gradually decreased, while in contrast, the gradual development of biopesticides. Biopesticides refer to a type of pesticide preparation that uses biological living organisms or their metabolites that can prevent and control pests, bacteria, weeds, nematodes, rats and other pests, or substances with specific effects synthesized through bionics as active ingredients. The active ingredients mainly come from animals, plants, and microorganisms. Plant-derived pesticides are a major component of biological pesticides.

Plant-derived pesticides are novel pesticides developed using plants themselves or effective active ingredients extracted from plants that have a prevention and control effect on plant pests and weeds. Among the various plant resources in the world, many plant resources contain effective active substances for preventing and controlling diseases and eliminating pests, including *Tanacetum cinerariifolium, Melia azedarach,* etc. Plant-derived pesticides have abundant plant resources that can be developed and broad prospects for industrialization.

In the research and development of plant-derived pesticides, the extracts of plant active substances we obtained cannot be used directly, and the addition of some adjuvants is needed to formulate the extracts into stable, safe, and efficient pesticide preparations. Currently, the main pesticide formulations include the following types: suspension concentrate (SC), emulsifiable concentrate (EC), microemulsion (ME), emulsion oil in water (EW), wettable powder (WP), water-dispersible granule (WDG, also known as dry flowable), aqueous solution (AS),granule (GR), and microcapsule suspension (CS). For plant-derived pesticide formulations, much research focuses on environmentally friendly formulations such as microemulsions, microcapsule suspensions, and water-dispersible granules. Meanwhile, in the development of emulsifiable concentrates, efforts are directed toward replacing highly polluting adjuvants like xylene with novel eco-friendly adjuvants to achieve an upgraded EC formulation.

SUMMARY

The present application provides an emulsifiable concentrate formulation of *Curcuma longa* rhizome extract, a preparation method therefor, and use thereof in the prevention and control of plant powdery mildew.

In a first aspect, the present application provides an emulsifiable concentrate formulation of *Curcuma longa* rhizome extract. Based on the mass percentage content, a component of the emulsifiable concentrate formulation of *Curcuma longa* rhizome extract comprises 30-70% of a *Curcuma longa* rhizome extract, 10-35% of an emulsifier, and 15-50% of a solvent.

In the present application, components of the *Curcuma longa* rhizome extract, the emulsifier, and the solvent in a specific mass ratio are compounded to prepare a novel emulsifiable concentrate formulation for preventing and controlling plant powdery mildew, wherein the *Curcuma longa* rhizome extract serves as the active ingredient. The formulation features a simple preparation process and user-friendly application, while demonstrating exceptional thermal stability across both high and low temperatures, which can ensure the *Curcuma longa* rhizome extract maintains prolonged and consistent efficacy in powdery mildew prevention and control. Compared to synthetic chemical pesticides, the extract offers significant advantages: it is naturally derived and of low toxicity, does not accumulate in or pollute the environment, and degrades rapidly. Furthermore, compared to single-component synthetic pesticides, the *Curcuma longa* rhizome extract has a complex composition. Its efficacy against plant powdery mildew results from the synergistic interaction of multiple active components, with other non-active components playing auxiliary roles. Consequently, the target pathogens are less likely to develop resistance.

A mass percentage content of the *Curcuma longa* rhizome extract may be 30%, 35%, 40%, 45%, 50%, 55%, 60%, 65%, or 70%; a mass percentage content of the emulsifier may be 10%, 15%, 20%, 25%, 30%, or 35%; a mass percentage content of the solvent may be 15%, 20%, 25%, 30%, 35%, 40%, 45%, or 50%. Other specific values between the numerical ranges are also selectable, which are not recited here.

Preferably, based on the mass percentage content, a component of the emulsifiable concentrate formulation of *Curcuma longa* rhizome extract comprises: 40-60% of the *Curcuma longa* rhizome extract, 20-30% of the emulsifier, and 15-35% of the solvent.

In a case where the *Curcuma longa* rhizome extract, the emulsifier, and the solvent are combined at the aforementioned preferred mass ratio, the resulting product demonstrates superior stability under high-temperature, low-temperature, and room-temperature conditions, which can ensure the *Curcuma longa* rhizome extract has a prolonged and consistent efficacy in powdery mildew prevention and control.

Preferably, the solvent comprises any one or a combination of at least two of methyl oleate, soybean oil, corn oil, rapeseed oil, or pine-based oil.

In the present application, the green and environmentally friendly solvent is employed, which exhibits excellent biodegradability and low pollution potential, thereby minimizing environmental contamination and enhancing the applicability of the emulsifiable concentrate formulation product.

Preferably, the emulsifier comprises a non-ionic emulsifier and an anionic emulsifier.

Preferably, the non-ionic emulsifier comprises any one or a combination of at least two of polyoxyethylene tristyrylphenol ether, polyoxyethylene sorbitan trioleate, tristyrylphenol ethoxylate-propoxylate, or castor oil polyglycol ether ester.

Preferably, the anionic emulsifier is selected from any one or a combination of at least two of a diphenyl sulfonate, an $\alpha$-olefin sulfonate, a lignosulfonate, a sulfonate of ethoxylated alkylphenol, a sulfonate of alkoxylated arylphenol, a sulfonate of condensed naphthalene, a sulfonate of dodecylbenzene or tridecylbenzene, a sulfonate or a sulfosuccinate of naphthalene or alkylnaphthalene.

In the present application, the formulation of the emulsifier is optimized to achieve superior compatibility with both the solvent and the *Curcuma longa* rhizome extract, thereby enhancing system stability and ensuring prolonged and consistent efficacy of the *Curcuma longa* rhizome extract. The following formulation is a preferred formulation of the emulsifier.

Preferably, based on the mass percentage content, the emulsifier comprises 30-40% of polyoxyethylene tristyrylphenol ether, 30-40% of polyoxyethylene sorbitan trioleate, and 25-35% of calcium dodecylbenzene sulfonate.

A mass percentage content of polyoxyethylene tristyrylphenol ether may be selected as 30%, 32%, 33%, 35%, 36%, 38%, or 40%; a mass percentage content of polyoxyethylene sorbitan trioleate may be selected as 30%, 32%, 33%, 35%, 36%, 38%, or 40%; and a mass percentage content of calcium dodecylbenzene sulfonate may be selected as 25%, 27%, 28%, 30%, 32%, 35%, or 40%. Other specific values between the numerical ranges are also selectable, which are not recited here.

In the present application, through optimized selection of the solvent and the type of the emulsifier, the resulting emulsifiable concentrate formulation exhibits low toxicity, high safety, environmental friendliness, excellent stability, superior emulsification performance, and prolonged efficacy duration.

In the present application, the *Curcuma longa* rhizome extract is prepared by the preparation method comprising the following steps:

(1) drying and crushing a raw material of *Curcuma longa* rhizome, and performing extraction with an aqueous ethanol solution to obtain an extract solution;

(2) concentrating the extract solution, and then performing extraction with an organic solvent to obtain an aqueous-phase product and an oil-phase product; and

(3) subjecting the oil-phase product to molecular distillation to remove turmeric oleoresin to obtain the *Curcuma longa* rhizome extract.

The *Curcuma longa* rhizome extract prepared through the above-mentioned specific preparation process is adopted as a raw material for the emulsifiable concentrate formulation, which has strong operational feasibility and is suitable for scaled-up industrial production.

The *Curcuma longa* rhizome extract prepared through the above-mentioned specific preparation process exhibits excellent stability with prolonged storage duration. Furthermore, it demonstrates remarkable environmental friendliness, showing low toxicity to species in terrestrial environments such as birds, honeybees, and silkworms in application environments, and has exceptional efficacy in both preventing and treating plant powdery mildew disease, particularly effective against *Leguminosae, Rosaceae,* and *Vitaceae* plant species.

Preferably, a concentration of the aqueous ethanol solution is 65-85%, for example, 65%, 68%, 70%, 72%, 75%, 78%, 80%, 82%, or 85%. Other specific values between the numerical range are also selectable, which are not recited here.

The concentration of the aqueous ethanol solution is specifically selected to be 65-85%, because the *Curcuma longa* rhizome extract prepared under this concentration range demonstrates significantly enhanced efficacy in preventing and treating plant powdery mildew, particularly for *Leguminosae, Rosaceae,* and *Vitaceae* species.

Preferably, a solid-to-liquid ratio of the raw material of *Curcuma longa* rhizome to the aqueous ethanol solution is (30-70) g/L, for example, 30 g/L, 35 g/L, 40 g/L, 45 g/L, 50 g/L, 55 g/L, 60 g/L, 65 g/L, or 70 g/L. Other specific values between the numerical range are also selectable, which are not recited here.

Preferably, the extraction is performed at a temperature of 15-30°C, for example, 15°C, 20°C, 25°C, or 30°C. And, the extraction is performed for a period of 30-50 h, for example, 30 h, 35 h, 40 h, 45 h, 48 h, or 50 h. Other specific values between the numerical range are also selectable, which are not recited here.

Preferably, the molecular distillation is performed under a pressure condition of 0.1-5 Pa, for example, 0.1 Pa, 0.5 Pa, 1 Pa, 1.5 Pa, 2 Pa, 2.5 Pa, 3 Pa, 3.5 Pa, 4 Pa, or 5 Pa. And, the molecular distillation is performed at a temperature of 110-130°C, for example, 110°C, 115°C, 120°C, 125°C, or 130°C. Other specific values between the numerical range are also selectable, which are not recited here.

Preferably, a component of the emulsifiable concentrate formulation of *Curcuma longa* rhizome extract further comprises any one or a combination of at least two of a synergist, a defoamer, or an adhesive.

The synergist may be, for example, 5-[2-(octylsulfinyl)propyl]-1,3-benzodioxole, azone, or JPC-2; the adhesive may be, for example, mineral oil, gelatin, or polyvinyl alcohol.

In a second aspect, the present application provides a preparation method for the emulsifiable concentrate formulation of *Curcuma longa* rhizome extract according to the first aspect, which comprises:

mixing a formulated amount of the emulsifier and the solvent, and performing a primary emulsification, then mixing with the *Curcuma longa* rhizome extract and performing a secondary emulsification, to obtain the product.

Preferably, the emulsification is performed under a stirring condition, and a rotational speed of the stirring is 3000-8000 rpm, for example, 3000 rpm, 4000 rpm, 5000 rpm, 6000 rpm, 7000 rpm, or 8000 rpm. Other specific values between the numerical range are also selectable, which are not recited here.

Preferably, the primary emulsification and the secondary emulsification are independently performed for a period of 3-10 min, for example, 3 min, 4 min, 5 min, 6 min, 7 min, 8 min, 9 min, or 10 min. Other specific values between the numerical range are also selectable, which are not recited here.

In a third aspect, the present application provides use of the emulsifiable concentrate formulation of *Curcuma longa* rhizome extract according to the first aspect in preventing and controlling plant powdery mildew, wherein the plant comprises *Leguminosae, Rosaceae,* and *Vitaceae* plants.

In a fourth aspect, the present application provides a prevention and control method for plant powdery mildew, and the prevention and control method comprises: applying an effective dosage of the emulsifiable concentrate formulation of *Curcuma longa* rhizome extract according to the first aspect to *Leguminosae, Rosaceae,* or *Vitaceae* plants.

Compared with the prior art, the present application has the following beneficial effects.

In the present application, components of the *Curcuma longa* rhizome extract, the emulsifier, and the solvent in a specific mass ratio are compounded to prepare a novel emulsifiable concentrate formulation for preventing and controlling plant powdery mildew, wherein the *Curcuma longa* rhizome extract serves as the active ingredient. The formulation features a simple preparation process and user-friendly application, while demonstrating superior stability under high-temperature, low-temperature, and room-temperature conditions, which ensures that the *Curcuma longa* rhizome extract has a prolonged and consistent efficacy in powdery mildew prevention and control. Compared to synthetic chemical pesticides, the *Curcuma longa* rhizome extract is derived from natural plants with low toxicity, has no environmental accumulation to cause environmental pollution, and degrades rapidly. Furthermore, compared to single-component synthetic chemical pesticides, the *Curcuma longa* rhizome extract prepared in the present application has a complex composition. The control of plant powdery mildew is achieved through the synergistic interaction of multiple active constituents working together, while some other non-active components also play auxiliary roles. Thus, the target is less likely to develop resistance.

DETAILED DESCRIPTION

In order to further elaborate the technical means adopted by the present application and its effects, the technical solution of the present application is further illustrated below in combination with the preferred embodiments of the present application, but the present application is not limited to the scope of the embodiments.

The composite emulsifier TERSPERSE 3016 (short as T-3016) involved in the following examples was a product purchased from Indorama Lab. (original Agrochemical Lab. of Hengsimai Chemistry Research & Development Center (Shanghai) Co., Ltd.); polyoxyethylene tristyrylphenol ether involved in Example 7 was a product purchased from Yixing Jiateng Chemical Co., Ltd with a product No. 602#; and polyoxyethylene sorbitan trioleate involved in Example 7 was a product purchased from Jiangsu Haian Petrochemical Plant with a product No. T-85.

**Preparation Example 1**

This preparation example provides a *Curcuma longa* rhizome extract prepared through the following method:

(1) a raw material of dried *Curcuma longa* rhizome was crushed and then subjected to extraction by a 75% aqueous ethanol solution (in a solid-to-liquid ratio of 50 g/L) at 20°C for 48 h, to obtain an extract solution;

(2) the extract solution was concentrated and subjected to extraction by n-hexane, to obtain an aqueous-phase product and an oil-phase product; and

(3) the oil-phase product was subjected to molecular distillation under a pressure of 3 Pa and a temperature of 120°C to remove turmeric oleoresin, to obtain the *Curcuma longa* rhizome extract.

**Preparation Example 2**

This preparation example provides a *Curcuma longa* rhizome extract, wherein the preparation method differs from Preparation Example 1 only in that the 75% aqueous ethanol solution was replaced with an equal amount of 55% aqueous ethanol solution. Other conditions were all the same.

**Preparation Example 3**

This preparation example provides a *Curcuma longa* rhizome extract, wherein the preparation method differs from Preparation Example 1 only in that the 75% aqueous ethanol solution was replaced with an equal amount of 95% aqueous ethanol solution. Other conditions were all the same.

## Example 1

This example provides an emulsifiable concentrate formulation of *Curcuma longa* rhizome extract. The formulation of the emulsifiable concentrate is as follows: 50% of the *Curcuma longa* rhizome extract prepared by Preparation Example 1, 30% of methyl oleate, 20% of the composite emulsifier T-3016 (composed of 30% polyoxyethylene tristyrylphenol ether, 38% polyoxyethylene sorbitan trioleate, and 32% calcium dodecylbenzene sulfonate).

The preparation method for the emulsifiable concentrate is: the composite emulsifier T-3016 and methyl oleate were mixed in a formulated amount, and a primary emulsification was performed at 5000 rpm for 5 min, then mixed with the *Curcuma longa* rhizome extract, and a secondary emulsification was performed at 5000 rpm for 5 min, to obtain the product.

## Example 2

This example provides an emulsifiable concentrate formulation of *Curcuma longa* rhizome extract. The formulation of the emulsifiable concentrate is as follows: 50% of the *Curcuma longa* rhizome extract prepared by Preparation Example 1, 25% of soybean oil, 25% of the composite emulsifier T-3016 (composed of 30% polyoxyethylene tristyrylphenol ether, 38% polyoxyethylene sorbitan trioleate, and 32% calcium dodecylbenzene sulfonate).

The preparation method for the emulsifiable concentrate is: the composite emulsifier and soybean oil were mixed in a formulated amount, and a primary emulsification was performed at 7000 rpm for 3 min, then mixed with the *Curcuma longa* rhizome extract, and a secondary emulsification was performed at 3000 rpm for 10 min, to obtain the product.

## Example 3

This example provides an emulsifiable concentrate formulation of *Curcuma longa* rhizome extract. The formulation of the emulsifiable concentrate is as follows: 50% of the *Curcuma longa* rhizome extract prepared by Preparation Example 1, 20% of corn oil, 30% of the composite emulsifier T-3016 (composed of 30% polyoxyethylene tristyrylphenol ether, 38% polyoxyethylene sorbitan trioleate, and 32% calcium dodecylbenzene sulfonate).

The preparation method for the emulsifiable concentrate is: the composite emulsifier and corn oil were mixed in a formulated amount, and a primary emulsification was performed at 3000 rpm for 10 min, then mixed with the *Curcuma longa* rhizome extract, and a secondary emulsification was performed at 6000 rpm for 8 min, to obtain the product.

## Examples 4-5

This example provides two emulsifiable concentrate formulations of *Curcuma longa* rhizome extract, the formulation of which differs from Example 1 only in that the *Curcuma longa* rhizome extract prepared by Preparation Example 1 was replaced with the *Curcuma longa* rhizome extracts prepared by Preparation Examples 2-3 in an equal amount. Other components and contents were all the same.

## Example 6

This example provides an emulsifiable concentrate formulation of *Curcuma longa* rhizome extract, the formulation of which differs from Example 1 only in that the composite emulsifier T-3016 was replaced with another composite emulsifier (composed of 50% polysorbate-80 (Tween 80) and 50% calcium dodecylbenzene sulfonate) in an equal amount. Other components and contents were all the same.

## Example 7

This example provides an emulsifiable concentrate formulation of *Curcuma longa* rhizome extract, the formulation of which differs from Example 1 only in that the composite emulsifier T-3016 was replaced with another composite emulsifier (composed of 48% polyoxyethylene tristyrylphenol ether and 52% polyoxyethylene sorbitan trioleate) in an equal amount. Other components and contents were all the same.

## Example 8

This example provides an emulsifiable concentrate formulation of *Curcuma longa* rhizome extract, the formulation of which differs from Example 1 only in that the composite emulsifier T-3016 was replaced with a single emulsifier (calcium dodecylbenzene sulfonate) in an equal amount. Other components and contents were all the same.

**Test Example 1**

The emulsifiable concentrate formulations of *Curcuma longa* rhizome extract prepared by Examples 1-3 were subjected to characterizations of the following properties.

(1) Determination of the mass percentage of ar-turmerone (%): the sample was dissolved in anhydrous methanol and subjected to high-performance liquid chromatography separation with a mobile phase of methanol and water and a chromatographic column of C18 (4.6 mm × 250 mm, 5 μm). The external standard method was used for the determination of ar-turmerone content in the sample at a UV absorbance of 242 nm.

(2) Evaluation of emulsion stability: emulsion stability is a unique indicator of emulsifiable concentrate products and is directly related to the use of the product. The sample was diluted 200-fold with standard hard water, and the test was carried out according to GB/T 1603-2001. If no oil floats on the top, and no oil sedimentation and no precipitation at the bottom in the graduated cylinder, then the stability of the emulsion was determined to be qualified.

(3) Evaluation of durable foamability (1 min): the addition of emulsifier will cause a certain amount of bubbles to be generated when the product is dispersed in water. The amount of bubbles directly affects the use effect of the product; therefore, the amount of foam needs to be controlled. The test was carried out according to GB/T 28137-2011. If the foam amount is less than or equal to 60 mL after 1 min, the determination is qualified.

(4) Evaluation of low-temperature stability: sometimes, products need to be stored and transported under relatively cold conditions, which requires that the product to maintain a good appearance even at low-temperatures without precipitation. According to the method in 2.1 of GB/T 19137-2003, the product was stored at 2°C for 7 days, and if the volume of precipitated objects was less than or equal to 0.3 mL, the determination is qualified.

(5) Evaluation of thermal storage stability: thermal storage stability is an indicator for testing the shelf life of pesticides. The thermal storage stability test is to rapidly age the product by heating, indicating whether the product exhibits good storage stability at room temperature. The test was carried out according to the method in 2.1 of GB/T19136-2003, wherein the product was stored at 55°C for 14 days. According to the review requirements of the pesticide calibration institute and the actual storage test data of the product, specifications is that, after thermal storage, if the mass fraction and mass concentration of ar-turmerone in the emulsifiable concentrate of *Curcuma longa* rhizome extract is more than or equal to 95% of the values measured prior to the thermal storage, the emulsion stability is qualified with standard requirements.

The results are shown in Table 1.

Table 1

| Property | Example 1 | Example 2 | Example 3 |
|---|---|---|---|
| Appearance | Yellow flowable homogeneous transparent liquid | Yellow flowable homogeneous transparent liquid | Yellow flowable homogeneous transparent liquid |
| Mass percentage of ar-turmerone (%) | 6.5% | 6.5% | 6.5% |
| Emulsion stability | Qualified | Qualified | Qualified |
| Durable foamability | 46 mL | 52 mL | 50 mL |
| Low-temperature stability | Qualified | Qualified | Qualified |
| Thermal storage stability | Qualified | Qualified | Qualified |

As can be seen from the data in Table 1: the emulsifiable concentrate formulation of *Curcuma longa* rhizome extract involved in the present application has superior emulsion stability, thermal storage stability, and low-temperature stability, which ensures that the *Curcuma longa* rhizome extract has a prolonged and consistent efficacy in powdery mildew prevention and control.

**Test Example 2**

The emulsifiable concentrate formulations of *Curcuma longa* rhizome extract prepared by Examples 1-3 were subjected to toxicological characterization:

(1) determination of acute oral median lethal dose in male and female SD rats: the test was performed according to the method referring to GB/T 15670.4-2017 *Toxicological test methods for pesticides registration-Part 4;*

(2) determination of acute dermal median lethal dose in male and female SD rats: the test was performed according to the method referring to GB/T 15670.5-2017 *Toxicological test methods for pesticides registration-Part 5;*

(3) determination of acute inhalation median lethal concentration in male and female SD rats: the test was performed according to the method referring to GB/T 15670.6-2017 *Toxicological test methods for pesticides registration-Part 6;*

(4) eye irritation test in New Zealand White rabbits: the test was performed according to the method referring to GB/T 15670.8-2017 *Toxicological test methods for pesticides registration-Part 8;* and

(5) skin sensitization test in Hartley guinea pigs: the test was performed according to the method referring to GB/T 15670.9-2017 *Toxicological test methods for pesticides registration-Part 9.*

The test results are shown in Table 2.

Table 2

| Property | Example 1 | Example 2 | Example 3 |
|---|---|---|---|
| Acute oral in female rats LD50 | >5500 mg/kg | >5500 mg/kg | >5500 mg/kg |
| Acute oral in male rats LD50 | >7000 mg/kg | >7000 mg/kg | >7000 mg/kg |
| Acute dermal in female rats LD50 | >2000 mg/kg | >2000 mg/kg | >2000 mg/kg |
| Acute dermal in male rats LD50 | >2000 mg/kg | >2000 mg/kg | >2000 mg/kg |
| Acute inhalation in female rats LD50 | >5000 mg/m$^3$ | >5000 mg/m$^3$ | >5000 mg/m$^3$ |
| Acute inhalation in male rats LD50 | >5000 mg/m$^3$ | >5000 mg/m$^3$ | >5000 mg/m$^3$ |
| Eye irritation in New Zealand White rabbits | Recovered within 30 h | Recovered within 34 h | Recovered within 36 h |
| Sensitization rate in Hartley guinea pigs | 0% | 0% | 0% |

As can be seen from the data in Table 2, the emulsifiable concentrate formulation of *Curcuma longa* rhizome extract involved in the present application has high safety, slightly toxic, low irritation, and weak allergenicity.

**Test Example 3**

The emulsifiable concentrate formulations of *Curcuma longa* rhizome extract prepared by Examples 1-3 were subjected to environmental impact assessment.
All the environmental impact tests were conducted by Shenyang Research Institute of Chemical Industry with the following results:

(1) acute oral toxicity in quails: according to the method referring to the content in GB/T 31270.9-2014 *Test guidelines on environmental safety assessment for chemical pesticides-Part 9* (female for 24 h/48 h/72 h/7 d);

(2) acute oral toxicity in honeybees: according to the method referring to the content in GB/T 31270.10-2014 *Test guidelines on environmental safety assessment for chemical pesticides-Part 10* (female for 24 h/48 h);

(3) acute contact toxicity in honeybees: according to the method referring to the content in GB/T 31270.10-2014 *Test guidelines on environmental safety assessment for chemical pesticides-Part 10* (male for 24 h/48 h); and

(4) acute toxicity in silkworms: according to the method referring to the content in GB/T 31270.11-2014 *Test guidelines on environmental safety assessment for chemical pesticides-Part 11* (for 96 h).

The test results are shown in Table 3.

Table 3

| Property | Example 1 | Example 2 | Example 3 |
|---|---|---|---|
| Acute oral toxicity in quails $LD_{50}$, (24 h/48 h/72 h/7 d), mg a.i./kg weight | >698 | >698 | >698 |
| Acute oral toxicity in honeybees $LD_{50}$, (24 h/48 h), μg a.i./each honeybee | >99.3 | >99.3 | >99.3 |
| Acute contact toxicity in honeybees $LD_{50}$, (24 h/48 h), μg a.i./each honeybee | >100 | >100 | >100 |
| Acute toxicity in silkworms $LC_{50}$, (24 h/48 h/72 h/96 h), mg a.i./L | >500 | >500 | >500 |

As can be seen from the data in Table 3, the *Curcuma longa* rhizome extracts involved in the present application are environmentally friendly and have low toxicity to birds, honeybees, silkworms, and other organisms in the environment.

**Test Example 4**

The emulsifiable concentrate formulations of *Curcuma longa* rhizome extract prepared by Examples 1-8 were subjected to tests for the prevention and control of pea powdery mildew.

(1) Cultivation of pea seedlings: Pea seeds (variety: 'Sweet Crisp') were soaked in a Petri dish with water for 24 h at room temperature, then the water was drained, and moistened absorbent cotton was placed in the dish, and pea seeds were distributed evenly in the dish. The cotton was kept moist by daily watering. After approximately one week, when the pea seedlings reached a height of 2-3 cm, they were transplanted into small pots and watered every two days. Pea seedlings were selected for experiment when the first true leaf was fully expanded and the second true leaf had begun to unfold, ensuring they were healthy and of uniform size.

(2) Preparation of *Erysiphe pisi DC.* spore suspension: the spray method was used to inoculate the conidia suspension of the pathogen to pea seedlings, thereby it is necessary to prepare a spore suspension with an appropriate concentration, and the method is as follows:

(2.1) purified water was filled into a spray bottle, freshly developed powdery mildew spots on infected leaves were selected, and the spores were washed off into a clean beaker by gentle spraying; and

(2.2) the collected spore suspension was uniformly mixed, and one droplet was taken on a slide and examined by a microscope to assess spore turgidity and morphology and observe the number of spores in the field of view at a magnification of 15 * 10 to check if it met the requirements. Requirements on the spore suspension: spores were plump in morphology to ensure the viability; 20-30 spores per field of view at the magnification of 15 * 10, which was the optimal range; and the spore suspension needed to be used within 2 h from preparation to ensure the viability of spores.

(3) Inoculation of *Erysiphe pisi DC.:*

(3.1) the prepared spore suspension was uniformly sprayed onto pea leaves;

(3.2) the inoculated pea seedlings were transferred to a growth chamber, and the remaining spore suspension was sprayed inside the chamber to create a high humidity environment, then the chamber was covered and incubated at about 25°C for 24 h; and

(3.3) after 24 h, the chamber was uncovered and the pea seedlings were taken out, and after the leaves were air-dried, the pea seedlings could be subjected to chemical treatment.

(4) Administration method:

(4.1) for each group, 0.1 mL emulsifiable concentrate formulation was diluted 200-fold with deionized water, filled into a spray bottle, and labeled for later use;

(4.2) preparation of agent for adjuvant-control group: according to the preparation formula, the content of the *Curcuma longa* rhizome extract was replaced with water, and then an adjuvant solution was prepared with the same concentration of the adjuvant contained in the formulation; 0.1 mL the adjuvant solution was diluted 200-fold with water, filled into a spray bottle, and labeled for later use;

(4.3) preparation of agent for positive control group: fungicide tebuconazole suspension concentrate of 430 g/L was diluted 2000-fold with water, filled into a spray bottle, and labeled for later use;

(4.4) preparation of blank control group: deionized water was filled into a spray bottle, and labeled for later use;

(4.5) spraying: the inoculated pea seedlings were cultivated for 24 h, and treated with agents (4 replicates per treatment); leaves were sprayed with the corresponding agent evenly, and the standard was to cover the complete surface of the leaves;

(4.6) cultivation: the agent-treated pea seedlings were cultivated at about 25°C and humidity around 70%, and watered every 2 days; and

(4.7) observation: the phytotoxicity symptom was observed 24 h and 5 days after the spraying, and agent causing severe phytotoxicity symptom was discarded according to the phytotoxicity symptom; the disease incidence of the remained agents was counted six days later to calculate the prevention and control effect, and the prevention and control changes were observed and recorded for several consecutive days.

(5) Efficacy evaluation:

10 plants were evaluated per group of samples, and all leaves were assessed per plant. The disease rating scale was as follows:

Grade 0: no lesions;

Grade 1: ≤5% leaf coverage with lesions;

Grade 3: 6-15% leaf coverage;

Grade 5: 16-25% leaf coverage;

Grade 7: 26-50% leaf coverage; and

Grade 9: ≥51% leaf coverage.

Disease index = [$\Sigma$(number of diseased leaves at each grade $\times$ corresponding grade value)] / (total number of leaves assessed $\times$ highest disease index 9) $\times$ 100

Control efficacy% = (disease index of control group after administration- disease index of other group after administration) / disease index of control group after administration$\times$ 100

The data of control efficacy is shown in Table 4.

Table 4

| Group | Control efficacy (%) |
|---|---|
| Example 1 | 85.71 |
| Example 2 | 82.38 |
| Example 3 | 83.26 |
| Example 4 | 74.82 |

(continued)

| Group | Control efficacy (%) |
|---|---|
| Example 5 | 72.25 |
| Example 6 | 80.96 |
| Example 7 | 78.22 |
| Example 8 | 75.43 |
| Adjuvant-control group | 0 |
| Positive control group | 85.47 |
| Blank control group | 0 |

As can be seen from the data in Table 4, the emulsifiable concentrate formulations of *Curcuma longa* rhizome extract involved in the present application have excellent efficacy of pea powdery mildew prevention and control, wherein the preparation conditions of the *Curcuma longa* rhizome extract and the formulation of the emulsifiable concentrate also affect this efficacy.

**Test Example 5**

The emulsifiable concentrate formulations of *Curcuma longa* rhizome extract prepared by Examples 1 and 4-6 were subjected to field efficacy trials against grape powdery mildew.

(1) Test target and crop variety

Grape variety: red globe;

Target pathogen: grape powdery mildew

(2) Test agents: the emulsifiable concentrate formulations from Examples 1 and 4-6 were diluted 500-fold with water for later use;
agent for positive control: 325 g/L azoxystrobin SC from Zhejiang Tianfeng Bioscience Co., Ltd. with a registration No.: PD20172823 and a batch No.: 20210318, diluted 1000-foldfor later use; simultaneously, a water-only control group was set.

(3) Trial location: Zengjiaying Village, Binchuan County, Dali, Yunnan, China
Block arrangement: the experiment set up 6 treatments, each treatment had 4 block repeats, and each block repeated an area of 15 m$^2$.

(4) Administration method: a 20-type knapsack electric sprayer from Zhengzhou Xinxiu Agricultural Machinery Co., Ltd. was used for spraying the formulations prepared according to the experimental design and sprayed uniformly onto plants across all treatments until runoff;
administration were conducted when the initial disease onset stage (i.e., when sporadic lesions appeared on lower leaves) twice at 8-day intervals, and the administration dates were recorded.

(5) Assessment method
Five points were assessed per treatment group, 2 plants were included in each point, and all leaves were assessed per plant.

The disease rating scale was as follows:

Grade 0: no lesions;

Grade 1: ≤5% leaf coverage with lesions;

Grade 3: 6-10% leaf coverage;

Grade 5: 11-20% leaf coverage;

Grade 7: 21-40% leaf coverage; and

Grade 9: ≥40% leaf coverage.

(6) Calculation method for efficacy

Disease index = [Σ(number of diseased leaves at each grade × corresponding grade value)] / (total number of leaves assessed × 9) × 100 Control efficacy (%) = [1 - (disease index of treatment block / disease index of control group)] × 100

The results were shown in Table 5.

Table 5

| Assessment date | Control group | Positive control group | Example 1 | Example 4 | Example 5 | Example 6 |
|---|---|---|---|---|---|---|
| Control efficacy after 8 days of the first administration | / | 60.85% | 73.42% | 64.77% | 62.86% | 70.95% |
| Control efficacy after 8 days of the second administration | / | 64.47% | 81.62% | 71.69% | 72.34% | 77.38% |

As can be seen from the data in Table 5, the emulsifiable concentrate formulations of *Curcuma longa* rhizome extract involved in the present application have excellent efficacy of grape powdery mildew prevention and control, wherein the preparation conditions of the *Curcuma longa* rhizome extract and the formulation of the emulsifiable concentrate also affect this efficacy.

**Test Example 6**

The emulsifiable concentrate formulations of *Curcuma longa* rhizome extract prepared by Examples 1 and 4-6 were subjected to field efficacy trials against rose powdery mildew.

(1) Test target and crop variety

Rose variety: awakening;

Target pathogen: rose powdery mildew.

(2) Test agents: the emulsifiable concentrate formulations from Examples 1 and 4-6 were diluted 500-fold with water for later use;
agent for positive control: 25% bupirimate ME from Xi'an MTI Co., Ltd. with a registration No.: PD20190149 and a batch No.: 20201023018, diluted 1000-fold for later use; simultaneously, a water-only control group was set.

(3) Trial location: Goujie Town, Yiliang County, Kunming, Yunnan, China
Block arrangement: the experiment set up 6 processes, each treatment had 4 block repeats, and each block repeated an area of 15 m$^2$.

(4) Administration method: a 20-type knapsack electric sprayer from Zhengzhou Xinxiu Agricultural Machinery Co., Ltd. was used for spraying the formulations prepared according to the experimental design and sprayed uniformly onto plants across all treatments until runoff;

administration were conducted when the initial disease onset stage (i.e., when sporadic lesions appeared on lower leaves) once, and the administration dates were recorded.

(5)Assessment method
Five points were assessed per treatment group, 2 plants were included in each point, and all leaves were assessed per plant.

The disease rating scale was as follows:

Grade 0: no lesions;

Grade 1: ≤5% leaf coverage with lesions;

Grade 3: 6-10% leaf coverage;

Grade 5: 11-20% leaf coverage;

Grade 7: 21-40% leaf coverage; and

Grade 9: ≥40% leaf coverage.

(6) Calculation method for efficacy

Disease index = [Σ(number of diseased leaves at each grade × corresponding grade value)] / (total number of leaves assessed × 9) × 100 Control efficacy% = [1 - (disease index of treatment block / disease index of control group)] × 100

The results were shown in Table 6.

Table 6

| Group | Control efficacy after 7 days of the first administration |
|---|---|
| Control group | / |
| Positive control group | 65.53% |
| Example 1 | 75.46% |
| Example 4 | 61.25% |
| Example 5 | 60.88% |
| Example 6 | 72.21% |

As can be seen from the data in Table 6, the emulsifiable concentrate formulations of *Curcuma longa* rhizome extract involved in the present application have excellent efficacy of rose powdery mildew prevention and control, wherein the preparation conditions of the *Curcuma longa* rhizome extract and the formulation of the emulsifiable concentrate also affect this efficacy.
The applicant declares that the present application illustrates an emulsifiable concentrate formulation of *Curcuma longa* rhizome extract, a preparation method therefor, and use thereof in the prevention and control of plant powdery mildew in the present application via the above examples, but the present application is not limited to the above examples, that is, the present application does not necessarily rely on the above examples to be implemented. Those skilled in the art should understand that any improvements of the present application, the equivalent substitution of each raw material, the addition of auxiliary ingredients, and the selection of specific methods shall fall within the protection scope and disclosure scope of the present application.

Claims

1. An emulsifiable concentrate formulation of *Curcuma longa* rhizome extract, wherein based on the mass percentage content, a component of the emulsifiable concentrate formulation of *Curcuma longa* rhizome extract comprises 30-70% of a *Curcuma longa* rhizome extract, 10-35% of an emulsifier, and 15-50% of a solvent.

2. The emulsifiable concentrate formulation of *Curcuma longa* rhizome extract according to claim 1, wherein based on the mass percentage content, a component of the emulsifiable concentrate formulation of *Curcuma longa* rhizome extract comprises: 40-60% of the *Curcuma longa* rhizome extract, 20-30% of the emulsifier, and 15-35% of the solvent.

3. The emulsifiable concentrate formulation of *Curcuma longa* rhizome extract according to claim 1 or 2, wherein the solvent comprises any one or a combination of at least two of methyl oleate, soybean oil, corn oil, rapeseed oil, or pine-based oil.

4. The emulsifiable concentrate formulation of *Curcuma longa* rhizome extract according to any one of claims 1-3, wherein the emulsifier comprises a non-ionic emulsifier and an anionic emulsifier;

   preferably, the non-ionic emulsifier comprises any one or a combination of at least two of polyoxyethylene tristyrylphenol ether, polyoxyethylene sorbitan trioleate, tristyrylphenol ethoxylate-propoxylate, or castor oil polyglycol ether ester;
   preferably, the anionic emulsifier is selected from any one or a combination of at least two of a diphenyl sulfonate, an $\alpha$-olefin sulfonate, a lignosulfonate, a sulfonate of ethoxylated alkylphenol, a sulfonate of alkoxylated arylphenol, a sulfonate of condensed naphthalene, a sulfonate of dodecylbenzene or tridecylbenzene, a sulfonate or a sulfosuccinate of naphthalene or alkylnaphthalene;
   preferably, based on the mass percentage content, the emulsifier comprises 30-40% of polyoxyethylene tristyrylphenol ether, 30-40% of polyoxyethylene sorbitan trioleate, and 25-35% of calcium dodecylbenzene sulfonate.

5. The emulsifiable concentrate formulation of *Curcuma longa* rhizome extract according to any one of claims 1-4, wherein the *Curcuma longa* rhizome extract is prepared by the preparation method comprising the following steps:

   (1) drying and crushing a raw material of *Curcuma longa* rhizome, and performing extraction with an aqueous ethanol solution to obtain an extract solution;
   (2) concentrating the extract solution, and then performing extraction with an organic solvent to obtain an aqueous-phase product and an oil-phase product; and
   (3) subjecting the oil-phase product to molecular distillation to remove turmeric oleoresin to obtain the *Curcuma longa* rhizome extract.

6. The emulsifiable concentrate formulation of *Curcuma Longa* rhizome extract according to claim 5, wherein a concentration of the aqueous ethanol solution is 65-85%;

   preferably, a solid-to-liquid ratio of the raw material of *Curcuma longa* rhizome to the aqueous ethanol solution is (30-70) g/L;
   preferably, the extraction is performed at a temperature of 15-30°C for a period of 30-50 h;
   preferably, the molecular distillation is performed under a pressure condition of 0.1-5 Pa at a temperature of 110-130°C.

7. The emulsifiable concentrate formulation of *Curcuma Longa* rhizome extract according to any one of claims 1-6, wherein a component of the emulsifiable concentrate formulation of *Curcuma longa* rhizome extract further comprises any one or a combination of at least two of a synergist, a defoamer, or an adhesive.

8. A preparation method for the emulsifiable concentrate formulation of *Curcuma Longa* rhizome extract according to any one of claims 1-7, wherein the preparation method comprises:

   mixing a formulated amount of the emulsifier and the solvent, and performing a primary emulsification, then mixing with the *Curcuma longa* rhizome extract and performing a secondary emulsification, to obtain the product;
   preferably, the emulsification is performed under a stirring condition, and a rotational speed of the stirring is 3000-8000 rpm;
preferably, the primary emulsification and the secondary emulsification are independently performed for a period of 3-10 min.

9. Use of the emulsifiable concentrate formulation of *Curcuma longa* rhizome extract according to any one of claims 1-7 in preventing and controlling plant powdery mildew, wherein the plant comprises *Leguminosae, Rosaceae,* and *Vitaceae* plants.

10. A method of preventing and controlling plant powdery mildew, comprising applying an effective amount of the emulsifiable concentrate formulation of *Curcuma longa* rhizome extract according to any one of claims 1-7 to *Leguminosae, Rosaceae,* and *Vitaceae* plants.

## INTERNATIONAL SEARCH REPORT

| International application No. |
|---|
| **PCT/CN2023/096990** |

| **A.** | **CLASSIFICATION OF SUBJECT MATTER** |
|---|---|

A01N65/48(2009.01)i; A01N25/02(2006.01)i; A01P3/00(2006.01)i

According to International Patent Classification (IPC) or to both national classification and IPC

| **B.** | **FIELDS SEARCHED** |
|---|---|

Minimum documentation searched (classification system followed by classification symbols)

IPC: A01N A01P

Documentation searched other than minimum documentation to the extent that such documents are included in the fields searched

Electronic data base consulted during the international search (name of data base and, where practicable, search terms used)

CNTXT, ENTXTC, VEN, CJFD, CNKI, ISI Web of Science, STN Caplus: 姜黄, 提取, 乳化剂, 分子蒸馏, 三苯乙烯酚聚氧乙烯醚, 山梨醇酐三油酸酯聚氧乙烯醚, 山梨醇三油酸酯聚氧乙烯醚, 十二烷基苯磺酸钙, 白粉病, 豆, 蔷薇, 玫瑰, 葡萄, curcum, turmeric, molecular distillation, emulsifier, polyoxyethylene ether, calcium dodecylbenzene sulfonate, powdery mildew, Erysiphe pisi DC., pea, rosaceaer, rose, grape

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | 庞倩茹 等 (PANG, Qianru et al.). "姜黄根提取物中姜黄油对黄瓜白粉病的控制作用 (Non-official translation: Control Effect of Turmeric Oil in Turmeric Root Extract on Powdery Mildew of Cucumber)" 中国植保导刊 (China Plant Protection), Vol. 35, No. 2, 31 December 2015 (2015-12-31), 63-66 ISSN: 1672-6820, preface, paragraph 1, and texts 1.2.1, 2.3 and 2.4 | 1-2, 7-9 |
| X | 刘艺 等 (LIU, Yi et al.). "姜黄制剂外观稳定性测试及其对瓜类白粉病的田间药效 (Appearance Stability Test of Turmeric Preparation and Its Control Effect on Melon Powdery Mildew in Field)" 上海交通大学学报 (农业科学版) (Journal of Shanghai Jiaotong University (Agricultural Science)), Vol. 35, No. 4, 31 August 2017 (2017-08-31), 71-75 ISSN: 1671-9964, preface, paragraph 2, and texts 1.3.1, 2.1 and 2.3 | 1-2, 7-9 |

| ✓ Further documents are listed in the continuation of Box C. | ✓ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **24 December 2023** | **10 January 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/096990** |

**C.     DOCUMENTS CONSIDERED TO BE RELEVANT**

| Category* | Citation of document, with indication, where appropriate, of the relevant passages | Relevant to claim No. |
| --- | --- | --- |
| Y | 庞倩茹 等 (PANG, Qianru et al.). "姜黄根提取物中姜黄油对黄瓜白粉病的控制作用 (Non-official translation: Control Effect of Turmeric Oil in Turmeric Root Extract on Powdery Mildew of Cucumber)" <br> 中国植保导刊 (China Plant Protection), Vol. 35, No. 2, 31 December 2015 (2015-12-31), 63-66 <br> ISSN: 1672-6820, <br>     preface, paragraph 1, and texts 1.2.1, 2.3 and 2.4 | 3-6, 9-10 |
| Y | 刘艺 等 (LIU, Yi et al.). "姜黄制剂外观稳定性测试及其对瓜类白粉病的用间药效 (Appearance Stability Test of Turmeric Preparation and Its Control Effect on Melon Powdery Mildew in Field)" <br> 上海交通大学学报 (农业科学版) (Journal of Shanghai Jiaotong University (Agricultural Science)), Vol. 35, No. 4, 31 August 2017 (2017-08-31), 71-75 <br> ISSN: 1671-9964, <br>     preface, paragraph 2, and texts 1.3.1, 2.1 and 2.3 | 3-6, 9-10 |
| Y | CN 113710091 A (BAYER AG) 26 November 2021 (2021-11-26) <br>     description, paragraphs 0022-0024, 0034-0035, 0044-0052, 0055-0064, 0114 and 0180-184 | 3-4 |
| Y | CN 1319418 A (GUANGZHOU MASSON PHARMACEUTICAL CO., LTD.) 31 October 2001 (2001-10-31) <br>     description, page 1, line 5-page 3, line 9 | 5-6 |
| Y | CN 101259247 A (MASSON GROUP CO., LTD.) 10 September 2008 (2008-09-10) <br>     description, page 1, line 5-page 3, line 6 | 5-6 |
| PY | CN 116195605 A (SHANGHAI JIAO TONG UNIVERSITY) 02 June 2023 (2023-06-02) <br>     claims 1, 2 and 4-7 | 5-6, 9-10 |
| Y | WO 2022101613 A1 (UPL CORP., LTD. et al.) 19 May 2022 (2022-05-19) <br>     description, page 6, lines 3-9, page 7, lines 1-5, and page 13, line 5-page 17, line 5 | 9-10 |
| A | CN 111642513 A (SHANDONG WEIFANG RAINBOW CHEMICAL CO., LTD.) 11 September 2020 (2020-09-11) <br>     claims 7-8 | 1-10 |
| A | CN 114009434 A (SHANGHAI JIAO TONG UNIVERSITY) 08 February 2022 (2022-02-08) <br>     abstract | 1-10 |

Form PCT/ISA/210 (second sheet) (July 2022)

| INTERNATIONAL SEARCH REPORT | | International application No. |
| --- | --- | --- |
| Information on patent family members | | **PCT/CN2023/096990** |

| Patent document cited in search report | | | Publication date (day/month/year) | Patent family member(s) | | | Publication date (day/month/year) |
| --- | --- | --- | --- | --- | --- | --- | --- |
| CN | 113710091 | A | 26 November 2021 | JP | 2022525946 | A | 20 May 2022 |
| | | | | MX | 2021011359 | A | 13 October 2021 |
| | | | | CO | 2021012179 | A2 | 30 September 2021 |
| | | | | EP | 3941199 | A1 | 26 January 2022 |
| | | | | CL | 2021002402 | A1 | 18 April 2022 |
| | | | | AR | 121034 | A1 | 13 April 2022 |
| | | | | KR | 20210142674 | A | 25 November 2021 |
| | | | | WO | 2020187871 | A1 | 24 September 2020 |
| | | | | US | 2022183279 | A1 | 16 June 2022 |
| | | | | CA | 3133874 | A1 | 24 September 2020 |
| | | | | AU | 2020242841 | A1 | 18 November 2021 |
| | | | | BR | 112021010215 | A2 | 05 October 2021 |
| | | | | VN | 83107 | A | 27 December 2021 |
| | | | | IN | 202117041883 | A | 02 September 2022 |
| | | | | RU | 2021130279 | A | 19 April 2023 |
| CN | 1319418 | A | 31 October 2001 | CN | 1150924 | C | 26 May 2004 |
| CN | 101259247 | A | 10 September 2008 | CN | 101259247 | B | 30 March 2011 |
| CN | 116195605 | A | 02 June 2023 | None | | | |
| WO | 2022101613 | A1 | 19 May 2022 | AR | 124026 | A1 | 08 February 2023 |
| CN | 111642513 | A | 11 September 2020 | None | | | |
| CN | 114009434 | A | 08 February 2022 | None | | | |

Form PCT/ISA/210 (patent family annex) (July 2022)